## Europäisches Patentamt
## European Patent Office
## Office européen des brevets

(11) Veröffentlichungsnummer: **0 091 562 B1**

(12)

# EUROPÄISCHE PATENTSCHRIFT

(45) Veröffentlichungstag der Patentschrift:
**16.09.87**

(51) Int. Cl.⁴: **H 04 L 25/26**, G 06 F 13/40

(21) Anmeldenummer: **83102334.6**

(22) Anmeldetag: **10.03.83**

(54) Datenübertragungssystem.

(30) Priorität: **10.04.82 DE 3213527**

(43) Veröffentlichungstag der Anmeldung:
**19.10.83 Patentblatt 83/42**

(45) Bekanntmachung des Hinweises auf die Patenterteilung:
**16.09.87 Patentblatt 87/38**

(84) Benannte Vertragsstaaten:
**BE CH FR GB IT LI NL SE**

(56) Entgegenhaltungen:
**FR - A - 2 163 876**

**ELECTRONIC DESIGN NEWS, Band 27, Nr. 4, Februar 1982, Seiten 167-176, BOSTON, MASSACHUSETTS, (US), A.J. WEISSBERGER: "Upgrade data communications with an RS-499 Interface"**
**TOUTE L'ELECTRONIQUE, Nr. 478, November 1982, Seiten 48-56, PARIS (FR), J.N. ROUSSET: "Applications spéciales des photocoupleurs"**

(73) Patentinhaber: **Heidelberger Druckmaschinen Aktiengesellschaft,
Kurfürsten-Anlage 52-60 Postfach 10 29 40,
D-6900 Heidelberg 1 (DE)**

(72) Erfinder: **Blasius, Udo, Eschenweg 7, D-6906 Leimen (DE)**
Erfinder: **Rodi, Anton, Karlsruher-Strasse 12, D-6906 Leimen 3 (DE)**

(74) Vertreter: **Stoltenberg, Baldo Heinz-Herbert, c/o Heidelberger Druckmaschinen AG
Kurfürsten-Anlage 52-60, D-6900 Heidelberg 1 (DE)**

**Beschreibung**

Die Erfindung betrifft ein Datenübertragungssystem nach dem Oberbegriff des Anspruchs 1.

Ein derartiges System ist aus dem FR-A-2 163 876 bekannt.

Bei dem bekannten Datenübertragungssystem wird die Zweidrahtleitung je nachdem ob der binäre Wert 0 oder 1 übertragen werden soll, von Strömen unterschiedlicher Richtung durchflossen, wobei in jedem Fall beide Leiter Strom führen.

In einem Fall ist die Stromrichtung so, dass die Leuchtdiode von Strom durchflossen wird, im anderen Fall fliesst der Strom durch die gegenpolig zur Leuchtdiode geschaltete Diode und erzeugt somit kein Ausgangssignal, sondern wird lediglich rückgeführt. Bei der vorliegenden Patentanmeldung wird zur Übertragung der Daten zwar auch eine Zweidrahtleitung benutzt, diese Zweidrahtleitung wird jedoch ausgenutzt zur Erhöhung der Störsicherheit, bzw. zur Verringerung der Fehlerrate in der Datenübertragung. Zu diesem Zweck werden die Daten in den beiden Leitungen als Gegentaktsignale übertragen, welche auch getrennt über die Leuchtdioden entkoppelt der nachfolgenden Schaltung zugeführt werden. In dieser Schaltung werden diese Signale in einem Differenzverstärker wieder zusammengeführt, so dass eingestreute Störungen auf eine Leitung zu keinen Fehlimpulsen in der Datenübertragung führen.

Die miteinander verbundenen Geräte sind voneinander galvanisch vollkommen entkoppelt. Durch die Potentialtrennung ist es möglich, dass das Massepotential der verschiedenen Geräte voneinander abweicht, ohne dass hierdurch Störungen zu befürchten sind. Der Dateneingang des Optokopplers ist dabei, was ohne Schwierigkeiten möglich ist, in seinen elektrischen Eigenschaften auf die Charakteristiken des Datenausgangs, der mit dem Optokoppler durch die elektrische Leitung verbunden wird, angepasst, so dass sich der Dateneingang des Optokopplers elektrisch genauso verhält wie ein herkömmlicher Dateneingang, also etwa die Charakteristiken des Standards RS-232 oder RS-422 aufweist. Die Stromversorgung für den Optokoppler, die dieser zur Speisung des in ihm enthaltenen Lichtempfängers und einer mit dieser verbundenen Verstärkerschaltung benötigt, kann aus dem Gerät, in das der Optokoppler eingebaut ist, entnommen werden, so dass ein besonderer zusätzlicher Aufwand, beispielsweise eine ausserhalb der Geräte vorhandene Stromversorgung, vermieden wird.

Die genannten Geräte können räumlich voneinander getrennt sein, sie können aber auch in geringem Abstand nebeneinander angeordnet sein, oder eines der Geräte kann in ein anderes der Geräte eingebaut sein.

Bei der bisher beschriebenen Erfindung wurde davon ausgegangen, dass eine leitende Abschirmung der elektrischen Leitungen nicht vorhanden ist. Die Erfindung ist jedoch auch bei solchen Datenübertragungssystemen ausführbar, bei denen die elektrischen Leitungen abgeschirmt sind. Hier ist zur Lösung der oben genannten Aufgabe zusätzlich zu den oben genannten Merkmalen vorgesehen, dass jede Abschirmung einer zwei Geräte miteinander verbindenden Leitung nur mit der Gerätemasse eines einzigen der beiden durch die Leitung miteinander verbundenen Geräte verbunden ist. Der Vorteil liegt hierbei darin, dass durch die Abschirmung der Leitungen oder Kabel keine leitende Verbindung zwischen den beiden miteinander verbundenen Geräten bewirkt wird, so dass sich diese auf unterschiedlichem Massepotential befinden können.

Die zuletzt geschilderte weitere Ausbildung kann beispielsweise dadurch verwirklicht sein, dass bei Verwendung von Leitungen oder Kabeln, die an ihren beiden Enden mit einem Steckverbinder versehen sind, die Abschirmung der Leitung oder des Kabels nicht mit demjenigen Anschluss des Steckverbinders verbunden ist, die zur Verbindung mit der einen Gerätemasse dient. Es könnten hier besonders ausgebildete Verbindungskabel vorgesehen sein, die sich gegenüber den Verbindungskabeln oder Verbindungsleitungen herkömmlicher Datenübertragungssysteme unterscheiden, bei denen die Abschirmung durchverbunden ist.

Bei einer anderen weiteren Ausbildung der Erfindung ist vorgesehen, dass für die Datenübertragung zwischen zwei Geräten für jede Übertragungsrichtung voneinander getrennte abgeschirmte Kabel vorgesehen sind, und dass die Abschirmung der Kabel entweder nur an ihrem mit dem Datenausgang verbundenen Ende oder nur an dem mit dem Dateneingang der angeschlossenen Geräte verbundenen Ende mit der Gerätemasse verbunden ist. Auch hier können gemäss der unmittelbar vorher beschriebenen Erfindung besonders ausgebildete Verbindungskabel verwendet werden. Es muss dann beim Anschluss der Kabel auf die richtige Anordnung der Kabel geachtet werden.

Sind die an den Geräten vorgesehenen Steckverbinder, die mit den Kabeln verbunden werden sollen, gemäss einer Ausführungsform der Erfindung so angeschlossen, dass beim Anschluss eines Kabels an diese Steckverbinder für das gesamte System einheitlich eine Verbindung der Abschirmung des Kabels nur mit der Gerätemasse desjenigen Geräts erfolgt, das bei einer Ausführungsform an der Dateneingangsseite des jeweiligen Kabels sich befindet und bei der anderen Ausführungsform an der Datenausgangsseite des Kabels, so können herkömmliche Kabel verwendet werden, bei denen also die Abschirmung an beiden Enden des Kabels mit zugeordneten Anschlüssen des am Kabelende angeordneten Steckverbinders verbunden sind. Dies erleichtert es, im Handel erhältliche fertige Kabel mit Stecker oder Buchsen an ihren Enden für das erfindungsgemässe System zu verwenden.

Als Gerät eines Datenverarbeitungssystems, das erfindungsgemäss ausgebildet sein kann, wird hier auch ein Adapter mit Stromversorgung verstanden, der einerseits Dateneingänge und/oder Datenausgänge aufweist, die in herkömmlicher Weise ausgebildet sind und zur Verbindung mit einem herkömmlichen Gerät eines Datenübertragungssystems, beispielsweise einem handelsüblichen Rechner zu verbinden sind, und der andererseits Datenausgänge und Dateneingänge aufweist, die erfindungsgemäss ausgebildet sind. Derartige Adapter dienen zur Anpassung handelsüblicher Geräte, die keine galvanische Signaltrennung besitzen und/oder unterschiedliche Schnittstellenstandards (zum Beispiel RS-232 und RS-422) aufweisen.

Falls die Geräte des Datenübertragungssystems neben den genannten Dateneingängen und Datenausgängen noch weitere Eingänge und Ausgänge, beispielsweise für Steuersignale, aufweisen, so sind auch diese in der oben geschilderten erfindungsgemässen Weise auszubilden; die eingangs genannten «Daten» sollen also auch ganz allgemein alle zu übertragenden elektrischen Grössen mit umfassen.

Entsprechendes gilt, wenn die Kabel, gegebenenfalls auch zusätzlich zu einer vorhandenen Abschirmung, einen Leiter enthalten, der bei herkömmlichen Datenübertragungssystemen zur Verbindung der Gerätemasse der miteinander durch die Kabel verbundenen Geräte dient. Auch hier ist dafür zu sorgen, dass dieser Leiter tatsächlich keine leitende Verbindung zwischen den Gerätemassen zweier miteinander verbundener Geräte hergestellt, insbesondere kann auch hier vorgesehen sein, dass derjenige Kontakt eines am Gerät vorgesehenen Steckverbinder, der zur Verbindung mit diesem genannten Leiter vorgesehen ist, innerhalb des Geräts selbst nicht angeschlossen ist.

Weiter Merkmale und Vorteile der Erfindung ergeben sich aus der nachfolgenden Beschreibung eines Ausführungsbeispiels an Hand der Zeichnung, die erfindungswesentliche Einzelheiten zeigt, und aus den Ansprüchen.

Die einzige Figur zeigt stark schematisiert ein Datenübertragungssystem, das einen Kleinrechner (Personal-Computer), einen Adapter und ein weiteres Daten erfassendes und aufbereitendes Gerät aufweist.

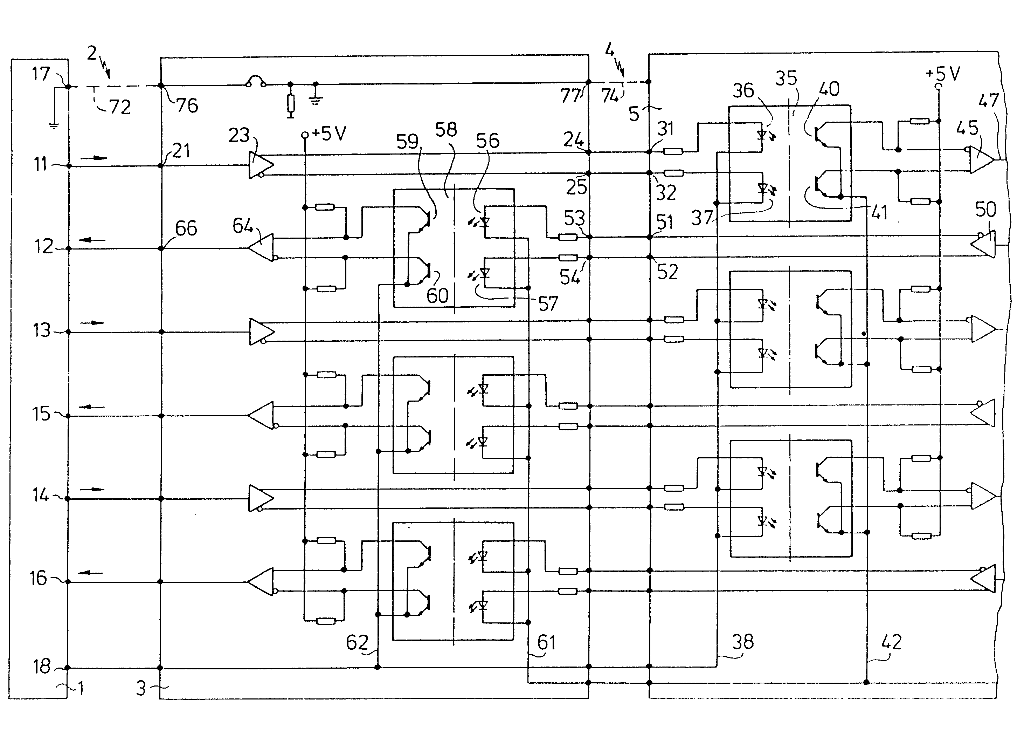

Bei dem in Fig. 1 gezeigten Datenübertragungssystem ist ein Personal-Computer oder Kleinrechner 1 vorgesehen, der über ein Kabel 2 mit einem Adapter 3 verbunden ist, der wiederum über ein Kabel 4 mit einem elektronischen Steuergerät 5 verbunden ist, das in der Figur nur im Bereich seiner mit dem Adapter 3 verbundenen Eingänge und Ausgänge gezeigt ist. Der Kleinrechner 1 weist einen Datenausgang 11 und einen Dateneingang 12 auf, ausserdem Ausgänge 13 und 14 für Steuersignale, sowie Dateneingänge 15 und 16 für Steuersignale. Ausserdem ist ein Anschluss 17 vorgesehen, der sich auf Schutzmassepotential befindet und daher unter anderem auch mit dem Metallgehäuse des Kleinrechners 1 verbunden ist, sowie ein Anschluss 18 mit der Bezeichnung Signalmasse.

Der Adapter 3 weist drei Paare von Signalwegen auf, die untereinander jeweils gleich sind; es genügt daher, lediglich eines der Paare zu beschreiben. Ein mit dem Kleinrechner 1 über das Kabel 2 verbundener Dateneingang 21, der ein Eintaktsignal empfängt, ist mit einem Verstärker 23 verbunden, an dessen beiden Ausgängen ein Gegentaktsignal erscheint, das zu Ausgängen 24 und 25 des Adapters 3 geleitet wird. Von dort wird es über zwei Adern des Kabels 4 Dateneingängen 31 und 32 des Geräts 5 zugeführt. Vom Eingang 31 gelangen die elektrischen Signale über einen Schutzwiderstand zu einer in einem Optokoppler 35 angeordneten Leuchtdiode 36, deren anderer Anschluss mit einer allen Optokopplern in dem Gerät 5 gemeinsamen Leitung 38 verbunden ist. Der Eingang 32 führt über einen Schutzwiderstand zu einer Leuchtdiode 37 im gleichen Optokoppler 35, deren anderer Anschluss wiederum mit der Leitung 38 verbunden ist. Die Leuchtdioden 36 und 37 sind in an sich bekannter Weise optisch mit Fototransistoren 40 und 41 gekoppelt, deren Emitter, wie auch die Emitter der anderen Fototransistoren in den übrigen Optokopplern, mit einer gemeinsamen Leitung 42 verbunden sind. Die Kollektoren der Fototransistoren 40 und 41 des Optokopplers 35 sind mit dem invertierenden beziehungsweise nicht invertierenden Eingang eines Operationsverstärkers 45 verbunden, an dessen Ausgang über eine Leitung 47 das verstärkte Ausgangssignal, das dem Datenausgang 11 des Kleinrechners 1 verlassenden Signals zugeordnet ist, zur Verfügung steht.

In umgekehrter Richtung gelangen Daten aus dem nicht gezeigten Teil des Geräts 5 zum Eingang eines Verstärkers 50 im Gerät 5, der einen invertierenden und einen nicht invertierenden Ausgang aufweist, die mit Datenausgängen 51 und 52 des Geräts 5 verbunden sind, und von dort über zwei Adern des Kabels 4 zu Dateneingängen 53 und 54, die in völlig gleicher Weise, wie oben beim Optokoppler 35 im Gerät 5 beschrieben, mit den Leuchtdioden 56 und 57 eines Optokopplers 58 verbunden sind, der baugleich mit dem Optokoppler 35 ausgeführt ist. Die Fototransistoren 59 und 60 dieses Optokopplers sind in einer Weise, die der oben beim Optokoppler 35 beschriebenen Schaltung völlig entspricht, einerseits mit einer allen Emittern der Fototransistoren im Adapter 3 gemeinsamen Leitung 62 und andererseits mit dem invertierenden und nicht invertierenden Eingang eines Operationsverstärkers 64 verbunden, dessen Ausgang mit einem Datenausgang 66 des Adapters 3 verbunden ist, der über eine Leitung des Kabels 2 mit dem Dateneingang 12 des Kleinrechners 1 verbunden ist.

Die Kathoden der Leuchtdioden 56 und 57 und der übrigen Leuchtdioden der Optokoppler im Adapter 3 sind mit einer gemeinsamen Leitung 61 verbunden.

Die Übertragung der von den Ausgängen 13 und 14 stammenden Steuersignale des Kleinrechners 1 zum Gerät 5 und die Übertragung der vom Gerät 5 stammende Steuersignale zu den Steuersignaleingängen 15 und 16 des Kleinrechners 1 erfolgt in der gleichen soeben beschriebenen Weise.

Die Leitung 38 des Geräts 5 ist mit der Leitung 62 des Adapters 3 über eine Ader des Kabels 4 verbunden, und die Leitung 62 ist über eine Ader des Kabels 2 mit dem Anschluss 18 (Signalmasse) des Kleinrechners 1 verbunden. Das Potential dieser Signalmasse liegt in der Mitte zwischen den Potentialen der Signale, die an den beiden Ausgängen des Verstärkers 23 und der diesem entsprechenden anderen Verstärker an den Eingängen des Adapters 3 auftreten.

In ähnlicher Weise ist die Leitung 61 des Adapters 3 mit der Leitung 42 des Geräts 5 über eine Ader des Kabels 4 verbunden und die Leitung 42 ist mit der Signalmasse des Geräts 5 in nicht dargestellter Weise verbunden.

Durch das Vorhandensein eines Potentials «Signalmasse» und durch die Verbindung der Kathode jeder der beiden Leuchtdioden 36 und 37 in den Optokopplern 35 des Geräts 5 wird das an den Eingängen 31 und 32 erscheinende Gegentaktsignal so ausgewertet, als ob es sich um zwei gegenphasige Eintaktsignale handelt. Dies hat den Vorteil der Störsicherheit.

Gleiches gilt natürlich für die Übertragung der Daten- und Steuersignale in umgekehrter Richtung.

Die Kabel 2 und 4 weisen jeweils eine Abschirmung auf, die in der Figur lediglich symbolisch durch eine Leitung 72 beim Kabel 2 und 74 beim Kabel 4 dargestellt ist. Die Abschirmung 72 ist beim Kleinrechner 1 mit dem Anschluss 17 verbunden und beim Adapter 3 mit einem Anschluss 76, von dem aus die Leitung zu einem mit der Abschirmung 74 des Kabels 4 verbundenen Anschluss 77 weiterführt. Innerhalb des Adapters 3 sind die Anschlüsse 76 und 77 in der angedeuteten Weise mit der Gerätemasse verbunden. Die Abschirmung 74 des Kabels 4 ist zwar noch bis zu einem in der Zeichnung nicht dargestellten Kontakt eines Mehrfachsteckverbinders im Gerät 5 geführt, dieser Kontakt ist aber im Gerät 5 selbst nicht angeschlossen. Es besteht daher eine vollkommene Potentialtrennung zwischen dem Gerät 5 und dem Adapter 3. Auf dem Kabel 2 erfolgt die Datenübertragung nach dem Standard RS-232, auf dem Kabel 4 nach dem Standard RS-422. Demzufolge herrschen auf den Leitungen des Kabels 2 Pegel von +12 V und −12 V (Eintaktsignale) und auf den Leitungen des Kabels 4, die Gegentaktsignale führen, Differenzspannungen im Bereich zwischen 2 V und 6 V. An den elektrischen Ausgängen der Optokoppler, also zum Beispiel am Eingang des Verstärkers 45 oder 64 liegen Signalpegel von +5 V und 0 V an. Im Adapter 3 und im Gerät 5 ist noch jeweils eine Anschlussklemme gezeigt, der jeweils eine Spannung von +5 V zugeführt wird, die der Stromversorgung des jeweiligen Geräts in 3 beziehungsweise 5 entnommen wird.

**Patentansprüche**

1. Datenübertragungssystem mit mehreren, durch elektrische Leitungen miteinander verbundenen Geräten (3, 5), zwischen denen eine Datenübertragung in beiden Richtungen möglich ist, wobei jedes Gerät mindestens einen, zwei Klemmen aufweisenden Datenausgang (24, 25) und einen davon mittels eines Optokopplers (35) galvanisch entkoppelten, zwei Klemmen aufweisenden Dateneingang (31, 32) enthält, wobei das Ausgangssignal des Optokopplers (35) einem Eingang einer Empfangseinrichtung zugeführt wird, und der Datenausgang (51, 52) eines Geräts (5) mit dem zugeordneten Dateneingang (53, 54) des anderen Geräts (3) über eine Zweidrahtleitung in Verbindung steht dadurch gekennzeichnet,

– dass die Signale an den beiden Klemmen eines jeden Ausgangs Gegentaktsignale sind,

– dass jeweils einer Zweidrahtleitung zwei Optokopplerleuchtdioden (36, 37) zugeordnet sind, wobei jede Leuchtdiode mit einer Eingangsklemme (31, 32) eines Dateneingangs verbunden ist,

– dass jeder der beiden, einem einzigen Eingang zugeordneten Leuchtdioden (36, 37) je ein Lichtempfänger (40, 41) zugeordnet ist und

– dass die Empfangseinrichtung als Differenzverstärker (45) ausgebildet ist, mit dessen beiden Eingängen die Ausgänge der Lichtempfänger gekoppelt sind.

2. Datenübertragungssystem nach Anspruch 1, dadurch gekennzeichnet, dass die Leitungen abgeschirmt sind und dass jede Abschirmung (74) einer zwei Geräte miteinander verbindenden Leitung nur mit der Gerätemasse eines einzigen (3) der beiden durch die Leitung miteinander verbundenen Geräte (3, 5) verbunden ist.

3. Datenübertragungssystem nach Anspruch 2, dadurch gekennzeichnet, dass für jede Übertragungsrichtung voneinander getrennte abgeschirmte Kabel vorgesehen sind, und dass die Abschirmung der Kabel entweder nur an ihrem mit dem Datenausgang verbundenen Ende oder nur an dem mit dem Dateneingang der angeschlossenen Geräte verbundenen Ende mit der Gerätemasse verbunden ist.

**Claims**

1. Characterizing feature of data transfer system with several devices (3, 5), interlinked by electrical lines, and between which data transfer is possible in both directions, where each device features at least one data output (24, 25) with two terminals and a data input (31, 32), galvanically isolated by means of an optocoupler (35), with two terminals, with the output signal of the optocoupler (35) being fed to an input of a receiver device, and the data output (51, 52) of a device (5) is linked to the corresponding data input (53, 54) of the other device (3) via a two-wire line is

that the signals at the two terminals of each output are push-pull signals,

that assigned to one two-wire line are two optocoupler LEDs (36, 37), with each LED being connected to an input terminal (31, 32) of a data input,

that assigned to each of the two LEDs (36, 37), assigned to one single input, is a light receiver (40, 41) and

that the receiver device is designed as a differential amplifier (45) with the outputs of the light receivers being linked to its two inputs.

2. Characterizing feature of data transfer system in accordance with Claim 1 is that the lines are screened and that each screening (74) of a line interlinking two devices is connected to the device ground of one single (3) device of the two devices (3, 5) interlinked by the line.

3. Characterizing feature of data transfer system in accordance with Claim 2 is that separate, screened cables are provided for each data transfer direction, and that the screening of the cables is connected to the device ground either only at the end connected to the data output or only at the end connected to the data input of the connected devices.

**Revendications**

1. Système de transmission de données comportant plusieurs appareils (3, 5) reliés entre eux par des lignes électriques et entre lesquels une transmission de données est possible dans les deux sens, et dans lequel chaque appareil contient au moins une sortie de données (24, 25) comprenant deux bornes et une entrée de données (31, 32) découplée galvaniquement de la sortie des données par l'intermédiaire d'un optocoupleur (35) et comportant deux bornes, et dans lelquel le signal de sortie de l'optocoupleur (35) est envoyé à une entrée d'un dispositif de réception, et la sortie de données (51, 52) d'un appareil (5) est reliée par l'intermédiaire d'une ligne bifilaire à l'entrée de données associée (53, 54) de l'autre appareil (3), caractérisé en ce

– que les signaux présents sur les deux bornes de chaque sortie sont des signaux symétriques,

– qu'à chaque ligne bifilaire sont associées deux diodes à luminescence (36, 37) de l'optocoupleur, chaque diode à luminescence étant reliée à une borne d'entrée (31, 32) d'une entrée de données,

– qu'à chaque des deux diodes à luminescence (36, 37) associées à une seule entrée, se trouve associé respectivement un récepteur de lumière (40, 41), et

– que le dispositif de réception est réalisé sous la forme d'un amplificateur différentiel (45), aux deux entrées duquel sont accouplées les sorties des récepteurs de lumière.

2. Système de transmission de données selon la revendication 1, caractérisé en ce que les lignes sont blindées et que chaque blindage (74) d'une ligne reliant entre eux deux appareils est reliée uniquement à la masse d'un seul (3) des deux appareils (3, 5) reliés entre eux par l'intermédiaire de la ligne.

3. Système de transmission de données selon la revendication 2, caractérisé en ce que des câbles blindés séparés l'un de l'autre sont prévus pour chaque sens de transmission et que le blindage des câbles est relié à la masse de l'appareil, soit uniquement au niveau de leur extrémité reliée à la sortie de données, soit uniquement à l'extrémité reliée à l'entrée de données de l'appareil raccordé.